# EUROPEAN PATENT SPECIFICATION

(11) **EP 3 916 233 B1**
(45) Date of publication and mention of the grant of the patent: **11.12.2024**
(21) Application number: 21175437.9
(22) Date of filing: 21.05.2021
(51) Int. Cl.: F04D 13/06

(54) **CONTROL BOX FOR PUMP**
STEUERKASTEN FÜR EINE PUMPE
BOÎTE DE COMMANDE POUR POMPE

(30) Priority: 28.05.2020 CN 202010468057
(43) Date of publication of application: 01.12.2021
(73) Proprietor: Hefei Xinhu Canned Motor Pump Co., Ltd., Anhui Province 230088 (CN)
(72) Inventor: WANG, Guoliang, Hefei City Anhui 230088 (CN); DING, Junfeng, Hefei City Anhui 230088 (CN); HU, Qiyong, Hefei City Anhui 230088 (CN); WANG, Yukuan, Hefei City Anhui 230088 (CN); HU, Zhi, Hefei City Anhui 230088 (CN); ZHANG, Li, Hefei City Anhui 230088 (CN); LI, Youyuan, Hefei City Anhui 230088 (CN); WANG, Jinchao, Hefei City Anhui 230088 (CN); WANG, Yong, Hefei City Anhui 230088 (CN); WANG, Yuang, Hefei City Anhui 230088 (CN)
(74) Representative: Flach Bauer & Partner Patentanwälte mbB

(56) References cited:
- EP-A1- 1 204 194
- EP-A1- 3 034 879
- WO-A1-2019/064767
- DE-U1- 202016 006 527
- US-A1- 2013 343 935
- US-A1- 2016 079 822

## Description

### CROSS REFERENCE

This application claims priority to Chinese Patent Application No. 202010468057.X, titled "CONTROL BOX FOR PUMP" and filed on May 28, 2020.

### TECHNICAL FIELD

The present disclosure relates to the field of pump technologies, and more particularly, to a control box for a pump.

### BACKGROUND

A pump is a machine that conveys fluid or pressurizes the fluid. Generally, a drive motor is provided in the pump. The drive motor is provided with a control box configured to control operation of the drive motor. Generally, the control box of the drive motor may be installed on a periphery of a radial side of the drive motor, or may be installed on an axial end part of the drive motor.

Further, the control box also needs to be provided with an outgoing line adapter interface configured to connect a signal line or a power line. However, in general, a working environment of the pump is relatively narrow. In the above two installation modes, if the interface connects the signal line or the power line, too much space needs to be taken up, making the control box unable to adapt to places where installation environments are limited.
EP 1 204 194 A1shows a pump driven by an electric motor whose speed can be regulated, with a motor housing accommodating a stator winding and with a pump housing forming an impeller chamber and adjoining the motor housing at the end face, wherein the components required for electronic regulation are accommodated in an electronics housing.
EP 3 034 879 A1 discloses a pump assembly driven by a motor and a pump shell. The pump shell is provided with a stator shell, which is internally provided with a motor for driving an impeller disposed in the pump shell. The stator shell is provided with a terminal box, which accommodates electric connectors of the motor and electronic or electric elements for control over and/or adjustment to the motor.
US 2016/079822A1 an electric fluid pump comprising a connection terminal wire segment of a winding wire which is positioned on a radial inner side of a guide groove of a crossover guide, and the guide groove of the crossover guide is shaped to extend circumferentially in such a direction that a radial distance is decreased gradually and thereby to set the takeout terminal wire segment of one phase on the radial inner side of crossover wire segments of the other phases.
US 2013/343935 A1 discloses a heat circulation pump, which includes a pump housing with a pump impeller arranged therein which is driven by an electric motor arranged in a motor housing which axially connects to the pump housing. The heat circulation pump also includes a terminal box which is axially connected to the motor housing in order to receive electric and/or electronic components of the engine control.
WO 2019/064767 A1 discloses a motor with a stator shell and a tubular housing. A terminal box consisting of several parts is mounted on the stator shell.

### SUMMARY

An objective of the present disclosure is to provide a control box for a pump to reasonably utilize space between an axial end part of a housing and a periphery of the end part, such that adaptability of the control box to narrow space is increased.

To achieve the above objective, the present disclosure adopts technical solutions as set forth in claim 1. Further advantageous embodiments are set forth in the dependent claims.

A control box for a pump includes:
a box body and a box cover, wherein the box cover is matched with the box body and is covered on the box body.

Both the box body and the box cover include a first region and a second region, wherein the first region of the box body is corresponding to the first region of the box cover, and the second region of the box body is corresponding to the second region of the box cover. The first regions are arranged on an end part, axially away from a pump body, of a housing of the pump, and the first regions are matched with the end part. The second regions are formed in a way that the second regions extend outwards in a radial direction of the housing, and an empty space is formed between the second regions and the pump body. The first region of the box body is detachably mounted on the end part.

Further, the second region of the box body is provided with an aperture.

Further, a receiving cavity is formed between the box cover and the box body, and a control module is arranged in the receiving cavity.

An electrical contact point is provided on a side of the control module facing the aperture, and the electrical contact point is arranged in correspondence with the aperture.

Further, an indicating member is provided on a side of the control module facing away from the aperture.

The first region of the box cover is provided with a display panel.

The display panel is provided with a transparent area and is configured to display the indicating member.

Further, the first region of the box body is connected to the end part by a plurality of bolts.

Further, an escape structure corresponding to the bolts is respectively arranged on the box body and the box cover of the control box.

Further, the escape structure is an escape slot.

Further, the second region extends outwards between adjacent escape structures in a radial direction of the housing, and a width of the second region is less than or equal to a distance between two adjacent bolts.

Further, the box body is detachably connected to the box cover.

Further, the box body is connected to the box cover by a screw, and a waterproof member is provided above the screw.

Compared with the existing technologies, the box cover provided by the present disclosure has following advantages.
1. Space outside a profile of the axial end part of the housing is reasonably utilized, such that the control box is adapt to environments where installation space is limited, and thus environmental adaptability of the pump is improved.
2. Both assembly and disassembly of the control box are convenient, which will not cause unnecessary damage or destruction to components, and thus costs are reduced.
3. Modular design of the control box can improve efficiency of mass production of the control box.

### BRIEF DESCRIPTION OF THE DRAWINGS

FIG. 1 is a front view of a control box according to an embodiment of the present disclosure;
FIG. 2 is a schematic diagram of the control box installed on a pump according to an embodiment of the present disclosure;
FIG. 3 is a side view of the pump provided with the control box according to an embodiment of the present disclosure; and
FIG. 4 is a schematic cross-sectional view of the pump provided with the control box according to an embodiment of the present disclosure.

In the drawings:
control box 100, box body 110, box cover 120, first region 111 of the box body, second region 112 of the box body, aperture 130, control module 140, display panel 150, indicating member 151;
pump 200, pump body 210, housing 220; bolt 3, nut 4, axial line 5;
outgoing line adapter module 6, wiring plug 7, empty space 8; and screw 9, and waterproof member 10.

### DETAILED DESCRIPTION

The following embodiments are intended to describe the present disclosure but are not intended to limit the scope of the present disclosure, which is limited by the attached claims.

### Embodiments

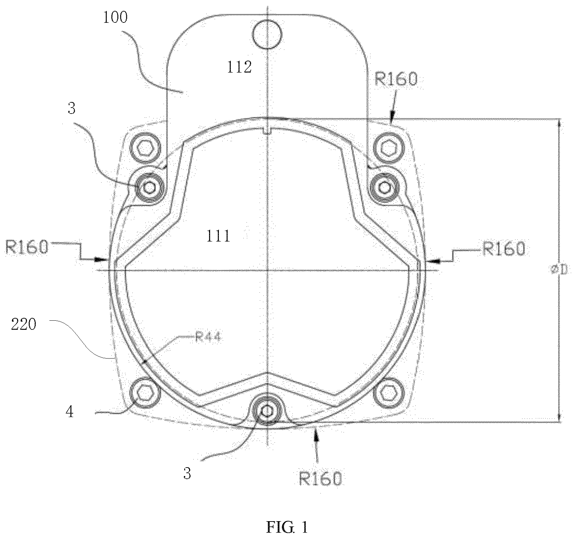

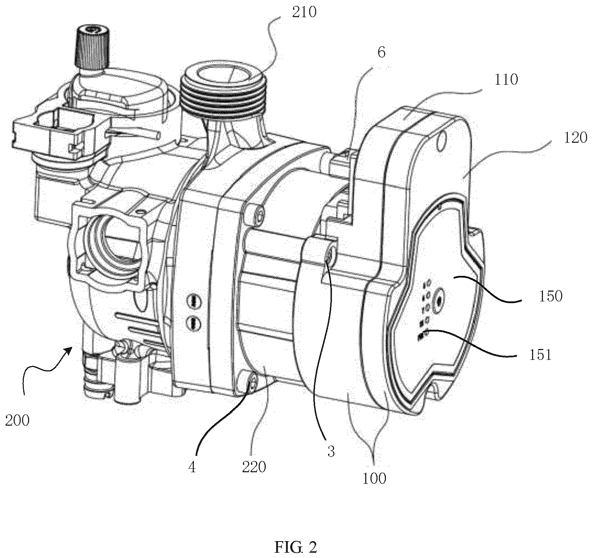

FIG. 1 is a front view of a control box according to an embodiment of the present disclosure; and FIG. 2 is a schematic diagram of the control box installed on a pump according to an embodiment of the present disclosure. A pump 200 is a machine that conveys fluid or pressurizes the fluid. As shown in FIG. 2, generally, the pump 200 includes a pump body 210 and a drive motor (not shown in the figure), and the drive motor (not shown in the figure) may be installed in a housing 220. In addition, the drive motor is provided with a control box 100 configured to control operation of the drive motor (not shown in the figure). Further, the control box 100 may be integrally installed on the housing 220. Generally, the control box 100 also needs to be provided with an outgoing line adapter interface configured to connect a signal line or a power line extracted from a client. The client is configured to transmit a control signal or supply power to the control box 100 to control operation of the drive motor (not shown in the figure). The control box 100 provided by this embodiment may be suitable for optimizing space occupancy of the control box 100.

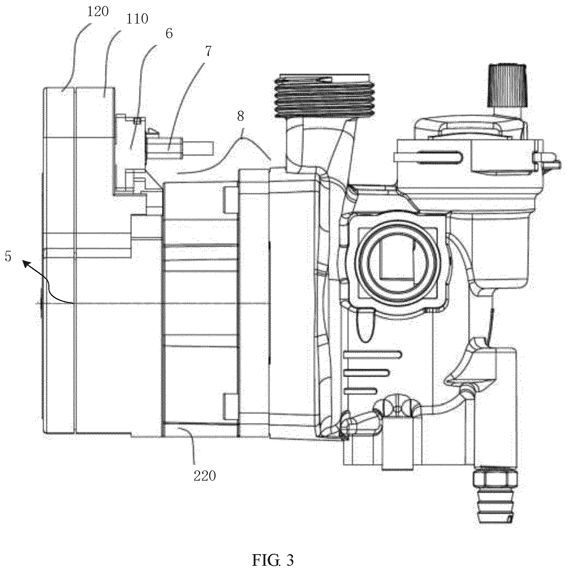

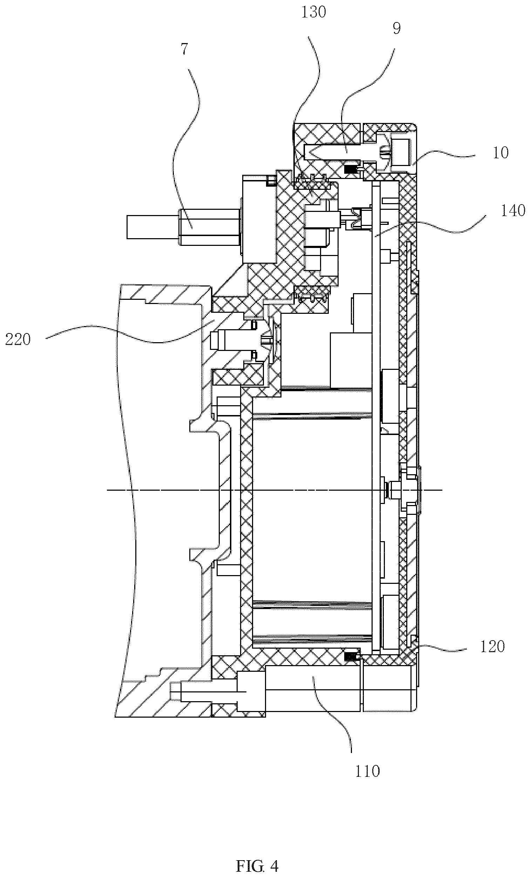

FIG. 3 is a side view of the pump provided with the control box according to an embodiment of the present disclosure; and FIG. 4 is a schematic cross-sectional view of the pump provided with the control box according to an embodiment of the present disclosure.

With reference to FIG. 1 to FIG. 4, the control box 100 includes a box body 110 and a box cover 120. The box cover 120 is matched with the box body 110 and is covered on the box body 110.

With reference to FIG. 1, both the box body 110 and the box cover 120 include a first region 111 and a second part 112, wherein the first region 111 of the box body 110 is corresponding to the first region 111 of the box cover 120, and the second region 112 of the box body 110 is corresponding to the second region 112 of the box cover 120.

The first region 111 and the second region 112 are in terms of relative location. Actually, the first region 111 and the second region 112 may be integrally molded.

Further, the first region 111 of the control box 100 is integrally arranged on an end part, axially away from the pump body 210, of the housing 220 of the pump 200, and the first region 111 is matched with the end part. For example, the first region 111 of the box body 110 is detachably installed on the end part, such that the integral first region 111 of the control box 100 is detachably installed on the end part.

The integral second region 112 of the control box 100 is formed in a way that the integral first region of the control box 100 extends outwards in a radial direction of the housing 220. With reference to FIG. 4, an empty space is formed between the second region 112 of the control box 100 and the pump body 210, such that the control box 100 can make full use of space between the axial end part of the housing 220 and a periphery of the end part to reasonably utilize narrow space. In this way, adaptability of the control box 100 to a use environment with strict requirements for space is improved.

In an embodiment, with reference to FIG. 1 to FIG. 2, the first region 111 of the box body 110 is connected to the axial end part of the housing 220 by a plurality of bolts 3. Further, an escape structure corresponding to the bolts 3 is respectively arranged on the box body 110 and the box cover 120 of the control box 100. Alternatively, the escape structure is an escape slot.

For example, in a specific embodiment, with reference to FIG. 1 to FIG 3, a dimension of the end part of the housing 220 is a square surrounded by four R160, and the first region 111of the box body 110 may be arranged in the square to avoid a nut 4 for fixing the housing 220 and the pump body 210. Further, the first region 111 of the box body 110 is connected to the housing 220 by a bolt 3, and the first region 111 of the box body 110 is also provided with an escape structure such as an escape slot to avoid the bolt 3. The second region 112 may extend outwards between adjacent escape structures (such as escape slots) in a radial direction of the housing 220. For example, the second region 112 is formed by extending in the radial direction (similarly vertical to an axial line 5 as shown in FIG. 3) of the housing 220, a width of the second region 112 may be less than or equal to a distance between two adjacent bolts 3, and an extension length of the second part 112 jointly depends on a diameter D of the end part of the housing 220 and a width of an outgoing line adapter module 6.

During use, the control box 100 may be installed on the housing 220 as an integral unit, such that the control box 100 and the pump 200 are installed separately as integral modules, and then are assembled together to facilitate scheduling of production.

The technical solution of this embodiment solves the problems of space occupation and installation difficulty caused by narrow working environment of the pump 200 and larger size of an outgoing line adapter interface. Thus the technical solution has following advantages.
1. Space outside a profile of the axial end part of the housing is reasonably utilized, such that the control box is adapt to environments where installation space is limited, and thus environmental adaptability of the pump is improved.
2. Both assembly and disassembly of the control box are convenient, which will not cause unnecessary damage or destruction to components, and thus costs are reduced.
3. Modular design of the control box can improve efficiency of mass production of the control box.

On the basis of the above technical solution, with reference to FIG. 2 to FIG. 4, the outgoing line adapter module 6 is detachably installed on the housing 220. An aperture 130 may be arranged on a side, facing the pump body 210, of the second region 112 of the box body 110. When the first region 111 of the box body 110 is installed on the end part, the outgoing line adapter module 6 may be inserted into the aperture 130. Further, the outgoing line adapter module 6 is configured to detachably install a wiring plug 7 in the axial direction of the housing 220, such that the wiring plug 7 is placed in the empty space 8.

Further, with reference to FIG. 4, a receiving cavity is formed between the box cover 120 and the box body 110, and a control module 140 is arranged in the receiving cavity.

An electrical contact point is provided on a side of the control module 140 facing the aperture 130, and the electrical contact point is arranged in correspondence with the aperture 130. When the outgoing line adapter module 6 is inserted into the aperture 130 and the wiring plug 7 is inserted into the outgoing line adapter module 6, the wiring plug 7 is electrically connected to the electrical contact point.

The control module 140 may be a circuit board provided with the electrical contact point. The electrical contact point may be a conductive elastic piece arranged on the circuit board, and the wiring plug 7 may be pointconnected to the elastic piece through an adapter member (not shown in the figure) on the outgoing line adapter module 6. The adapter member (not shown in the figure) may be a power pin or a signal pin.

Alternatively, with reference to FIG. 1 to FIG. 3, an indicating member 151 (for example, an indicating lamp) is provided on a side of the control module 140 facing away from the aperture 130. The first region 111 of the box cover 120 is provided with a display panel 150, and the display panel 150 is provided with a transparent area and is configured to display the indicating member 151. The transparent area may be formed by providing a hole on the display panel 150 and then filling the hole with transparent zdPET or pasting the transparent zdPET on the hole. The zdPET is a milky white or light yellow and highly crystalline polymer with a smooth and shiny surface.

On the basis of the above technical solution, with reference to FIG. 4, the box body 110 is detachably connected to the box cover 120. Alternatively, the box body 110 is connected to the box cover 120 by a screw 9, and a waterproof member 10 (such as a rubber plug) is provided above the screw 9. The waterproof member 10 may play roles in embellishment, waterproofing and covering the screw 9.

## Claims

1. A control box (100) for a pump (200) comprising a pump body (210) and a housing (220) of the pump, which are arranged in the axial direction, the control box (100) comprising:
a box body (110) and a box cover (120), the box cover (120) being matched with the box body (110) and being covered on the box body (110); and
both the box body (110) and the box cover (120) comprising a first region (111) and a second region (112), the first region (111) of the box body (110) being corresponding to the first region (111) of the box cover (120), and the second region (112) of the box body (110) being corresponding to the second region (112) of the box cover (120); the first regions (111) are configured to be arranged on an end part, axially away from the pump body (210), of the housing (220) of the pump, and the first regions (111) being matched with the end part; the second regions (112) being formed in a way that the second regions (112) extend outwards in a radial direction of the housing (220), and an empty space (8) being formed between the second regions (112) and the pump body (210) when the control box (100) is arranged on the pump (200); and the first region (111) of the box body (110) being configured to be detachably mounted on the end part of the housing (220), the control box being **characterised in that** an outgoing line adapter module (6) which is configured to detachably install a wiring plug (7) in an axial direction of the housing (220) is inserted into an aperture (130) arranged on a side of the second region (112) of the box body (110) configured to face the pump body (210) , such that the wiring plug (7) is placed in the empty space (8),
wherein the first region (111) of the box body (110) is configured to be connected to the end part of the housing (220) by a plurality of bolts (3),
wherein an escape structure corresponding to the bolts (3) is respectively arranged on the box body (110) and the box cover (120) of the control box (100),
wherein the second region (112) extends outwards between adjacent escape structures in a radial direction of the housing (220), and a width of the second region (112) is less than or equal to a distance between two adjacent bolts (3).

2. The control box (100) according to claim 1, wherein a receiving cavity is formed between the box cover (120) and the box body (110), and a control module (140) is arranged in the receiving cavity; and
an electrical contact point is provided on a side of the control module (140) facing the aperture (130), and the electrical contact point is arranged in correspondence with the aperture (130).

3. The control box (100) according to claim 2, wherein an indicating member (151) is provided on a side of the control module (130) facing away from the aperture (130);
the first region (111) of the box cover (120) is provided with a display panel (150); and the display panel (150) is provided with a transparent area and is configured to display the indicating member (151).

4. The control box (100) according to claim any of the preceding claims, wherein the escape structure is an escape slot.

5. The control box (100) according to any of the preceding claims, wherein the box body (110) is detachably connected to the box cover (120).

6. The control box (100) according to claim 5, wherein the box body (110) is connected to the box cover (120) by a screw (9), and a waterproof member (10) is provided above the screw(9).

## Patentansprüche

1. Schaltkasten (100) für eine Pumpe (200), umfassend einen Pumpenkörper (210) und ein Gehäuse (220) der Pumpe, die in der axialen Richtung angeordnet sind, wobei der Schaltkasten (100) umfasst:
einen Kastenkörper (110) und einen Kastendeckel (120), wobei der Kastendeckel (120) mit dem Kastenkörper (110) übereinstimmt und auf dem Kastenkörper (110) abgedeckt ist; und
sowohl der Kastenkörper (110) als auch der Kastendeckel (120) einen ersten Bereich (111) und einen zweiten Bereich (112) umfassen, wobei der erste Bereich (111) des Kastenkörpers (110) dem ersten Bereich (111) des Kastendeckels (120) entspricht, und der zweite Bereich (112) des Kastenkörpers (110) dem zweiten Bereich (112) des Kastendeckels entspricht, die ersten Bereiche (111) dazu konfiguriert sind, an einem Endteil des Gehäuses (220) der Pumpe axial von dem Pumpenkörper (210) entfernt angeordnet zu werden, und die ersten Bereiche (111) mit dem Endteil übereinstimmen; wobei die zweiten Bereiche (112) derart ausgebildet sind, dass sich die zweiten Bereiche (112) in einer radialen Richtung des Gehäuses (220) nach außen erstrecken, und ein Leerraum (8) zwischen den zweiten Bereichen (112) und dem Pumpenkörper (210) ausgebildet wird, wenn der Steuerkasten (100) an der Pumpe (200) angeordnet ist; und der erste Bereich (111) des Kastenkörpers (110) dazu konfiguriert ist, abnehmbar an dem Endteil des Gehäuses (220) montiert zu werden,
wobei der Steuerkasten **dadurch gekennzeichnet ist, dass**
ein Adaptermodul (6) für die abgehende Leitung, das dazu konfiguriert ist, einen Verdrahtungsstecker (7) abnehmbar zu installieren, in einer axialen Richtung des Gehäuses (220) in eine Öffnung (130) eingesetzt wird, die auf einer Seite des zweiten Bereichs (112) des Kastenkörpers (110) angeordnet ist, der dazu konfiguriert ist, dem Pumpenkörper (210) zugewandt zu sein, sodass der Verdrahtungsstecker (7) in den leeren Raum (8) platziert wird,
wobei der erste Bereich (111) des Kastenkörpers (110) dazu konfiguriert ist, mit dem Endteil des Gehäuses (220) durch eine Mehrzahl von Bolzen (3) verbunden zu werden,
wobei eine Entweichungsstruktur, die den Bolzen (3) entspricht, jeweils auf dem Kastenkörper (110) und dem Kastendeckel (120) des Steuerkastens (100) angeordnet ist,
wobei sich der zweite Bereich (112) nach außen zwischen benachbarten Entweichstrukturen in einer radialen Richtung des Gehäuses (220) erstreckt und eine Breite des zweiten Bereichs (112) weniger als oder gleich einem Abstand zwischen zwei benachbarten Bolzen (3) ist.

2. Steuerkasten (100) nach Anspruch 1, wobei zwischen dem Kastendeckel (120) und dem Kastenkörper (110) ein Aufnahmehohlraum (140) ausgebildet ist und in dem Aufnahmehohlraum ein Steuermodul (140) angeordnet ist; und
eine elektrische Kontaktstelle auf einer Seite des Steuermoduls (140) bereitgestellt ist, die der Öffnung (130) zugewandt ist, und die elektrische Kontaktstelle in Übereinstimmung mit der Öffnung (130) angeordnet ist.

3. Steuerkasten (100) nach Anspruch 2, wobei ein Anzeigeelement (151) auf einer Seite des Steuermoduls (130) bereitgestellt ist, die von der Öffnung (130) abgewandt ist;
der erste Bereich (111) des Kastendeckels (120) mit einer Anzeigetafel (150) versehen ist, und die Anzeigefeld (150) mit einer transparenten Fläche versehen ist und dazu konfiguriert ist, das Anzeigeelement (151) anzuzeigen.

4. Steuerkasten (100) nach einem der vorhergehenden Ansprüche, wobei die Entweichungsstruktur ein Entweichungsschlitz ist.

5. Steuerkasten (100) nach einem der vorhergehenden Ansprüche, wobei der Kastenkörper (110) abnehmbar mit dem Kastendeckel (120) verbunden ist.

6. Steuerkasten (100) nach Anspruch 5, wobei der Kastenkörper (110) mit dem Kastendeckel (120) durch eine Schraube (9) verbunden ist und ein wasserdichtes Element (10) oberhalb der Schraube (9) bereitgestellt ist.

## Revendications

1. Boîtier de commande (100) pour une pompe (200) comprenant un corps de pompe (210) et un logement (220) de la pompe, qui sont agencés dans la direction axiale, le boîtier de commande (100) comprenant
un corps de boîtier (110) et un couvercle de boîtier (120), le couvercle de boîtier (120) étant adapté au corps de boîtier (110) et étant recouvert sur le corps de boîtier (110) ; et
le corps de boîtier (110) et le couvercle de boîtier (120) comprenant tous deux une première région (111) et une deuxième région (112), la première région (111) du corps de boîtier (110) correspondant à la première région (111) du couvercle de boîtier (120), et la deuxième région (112) du corps de boîtier (110) correspondant à la deuxième région (112) du couvercle de boîtier (120) ; les premières régions (111) sont configurées pour être agencées sur une partie d'extrémité, axialement éloignée du corps de pompe (210), du logement (220) de la pompe, et les premières régions (111) étant adaptées à la partie d'extrémité ; les deuxièmes régions (112) étant formées de telle sorte que les deuxièmes régions (112) s'étendent vers l'extérieur dans une direction radiale du logement (220), et un espace vide (8) étant formé entre les deuxièmes régions (112) et le corps de pompe (210) lorsque le boîtier de commande (100) est agencé sur la pompe (200) ; et la première région (111) du corps de boîtier (110) étant configurée pour être montée de manière détachable sur la partie d'extrémité du logement (220),
le boîtier de commande étant **caractérisé en ce qu'**un module adaptateur de ligne sortante (6) qui est configuré pour installer de manière détachable une prise de câblage (7) dans une direction axiale du logement (220) est inséré dans une ouverture (130) agencée sur un côté de la deuxième région (112) du corps de boîtier (110) configuré pour faire face au corps de pompe (210), de sorte que la prise de câblage (7) est placée dans l'espace vide (8),
dans lequel la première région (111) du corps de boîtier (110) est configurée pour être reliée à la partie d'extrémité du logement (220) par une pluralité de boulons (3),
dans lequel une structure d'échappement correspondant aux boulons (3) est respectivement agencée sur le corps du boîtier (110) et le couvercle de boîtier (120) du boîtier de commande (100),
dans lequel la deuxième région (112) s'étend vers l'extérieur entre des structures d'échappement adjacentes dans une direction radiale du logement (220), et une largeur de la deuxième région (112) est inférieure ou égale à une distance entre deux boulons (3) adjacents.

2. Boîtier de commande (100) selon la revendication 1, dans lequel une cavité de réception est formée entre le couvercle de boîtier (120) et le corps de boîtier (110), et un module de commande (140) est agencé dans la cavité de réception ; et
un point de contact électrique est prévu sur un côté du module de commande (140) faisant face à l'ouverture (130), et le point de contact électrique est agencé en correspondance avec l'ouverture (130).

3. Boîtier de commande (100) selon la revendication 2, dans lequel un élément indicateur (151) est prévu sur un côté du module de commande (130) faisant face à la direction opposée à l'ouverture (130) ;
la première région (111) du couvercle de boîtier (120) est pourvue d'un panneau d'affichage (150) ; et le panneau d'affichage (150) est pourvu d'une région transparente et est configuré pour afficher l'élément indicateur (151).

4. Boîtier de commande (100) selon l'une quelconque des revendications précédentes, dans lequel la structure d'échappement est une fente d'échappement.

5. Boîtier de commande (100) selon l'une quelconque des revendications précédentes, dans lequel le corps de boîtier (110) est relié de manière détachable au couvercle de boîtier (120).

6. Boîtier de commande (100) selon la revendication 5, dans lequel le corps de boîtier (110) est relié au couvercle de boîtier (120) par une vis (9), et un élément étanche à l'eau (10) est prévu au-dessus de la vis (9).
